(19) Europäisches Patentamt
European Patent Office
Office européen des brevets

(11) **EP 3 140 902 B1**

(12) **EUROPÄISCHE PATENTSCHRIFT**

(45) Veröffentlichungstag und Bekanntmachung des Hinweises auf die Patenterteilung:
**14.06.2023   Patentblatt 2023/24**

(21) Anmeldenummer: **14735918.6**

(22) Anmeldetag: **01.07.2014**

(51) Internationale Patentklassifikation (IPC):
**H02M 1/32** (2007.01)

(52) Gemeinsame Patentklassifikation (CPC):
**H02M 1/32; H02M 7/4835**

(86) Internationale Anmeldenummer:
**PCT/EP2014/063925**

(87) Internationale Veröffentlichungsnummer:
**WO 2016/000757 (07.01.2016 Gazette 2016/01)**

(54) **SUBMODUL EINES MODULARTIG AUFGEBAUTEN BREMSSTELLERS, BREMSSTELLER UND EIN VERFAHREN ZUM BETREIBEN DES BREMSSTELLERS**

SUB-MODULE OF A MODULAR BRAKING UNIT, BRAKING UNIT, AND METHOD FOR OPERATING THE BRAKING UNIT

SOUS-MODULE D'UN AJUSTEUR DE COMMANDE DE FREIN À CONCEPTION MODULAIRE, AJUSTEUR DE COMMANDE DE FREIN ET PROCÉDÉ POUR FAIRE FONCTIONNER L'AJUSTEUR DE COMMANDE DE FREIN

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**15.03.2017   Patentblatt 2017/11**

(73) Patentinhaber: **Siemens Energy Global GmbH & Co. KG**
**81739 München (DE)**

(72) Erfinder:
• **ALVAREZ VALENZUELA, Rodrigo Alonso**
  **90408 Nürnberg (DE)**
• **SCHUSTER, Dominik**
  **91456 Diespeck (DE)**
• **WÜRFLINGER, Klaus**
  **90419 Nürnberg (DE)**

(56) Entgegenhaltungen:
EP-A2- 2 596 980          CN-A- 102 957 378
DE-A1-102008 045 247     DE-A1-102008 045 247
DE-A1-102012 220 388

• V Hussennether ET AL: "Projects BorWin2 and HelWin1 - Large Scale Multilevel Voltage-Sourced Converter Technology for Bundling of Offshore Windpower", , 9 March 2012 (2012-03-09), XP055489887, Retrieved from the Internet: URL:http://www.ptd.siemens.de/B4_306_2012v2_HelWin1_BorWin2.pdf [retrieved on 2018-07-03]
• J Dorn: "Trans Bay Cable - A Breakthrough of VSC Multilevel Converters in HVDC Transmission", CIGRE - 2012 San Francisco Colloquium, 9 March 2012 (2012-03-09), pages 2712-2720, XP055489881, DOI: 10.1049/iet-gtd.2016.2082 Retrieved from the Internet: URL:http://www.ptd.siemens.de/TransBayCable__HVDC_PLUS_Paper.pdf [retrieved on 2018-07-03]

**Beschreibung**

Die Erfindung betrifft ein Submodul eines modulartig aufgebauten und an ein Gleichspannungs-Übertragungsnetz angeschlossenen Bremsstellers, wobei jedes Submodul eine Inversdiode und einen dazu über eine Freilaufdiode parallel liegenden Speicherkondensator sowie eine an den Speicherkondensator angeschlossene energieverzehrende Schaltungseinheit aufweist.

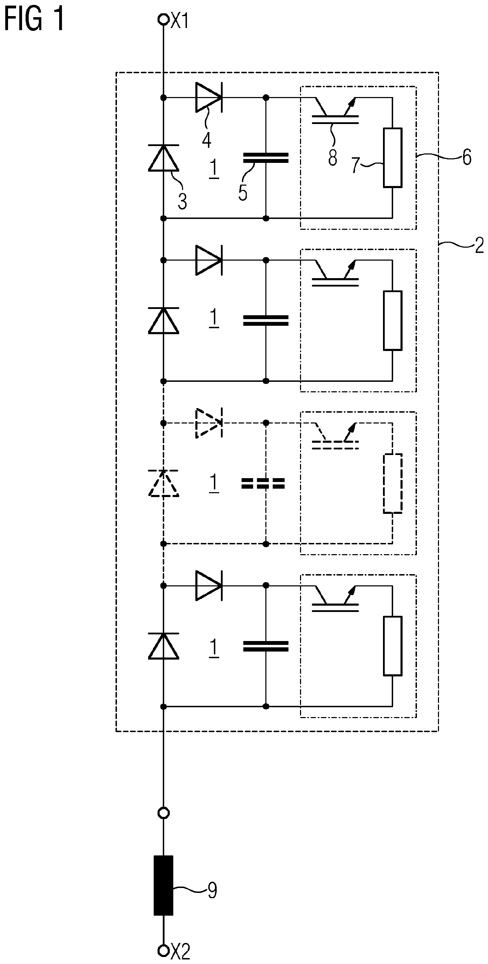

Ein solches Submodul wird mehrfach in einem bekannten Bremssteller eingesetzt, wie er in Figur 1 dargestellt ist. Jedes Submodul 1 des bekannten Bremsstellers 2 besteht jeweils aus einer Inversdiode 3 und einer Freilaufdiode 4, über die ein Speicherkondensator 5 geladen wird. An den Speicherkondensator 5 ist eine energieverzehrende Schaltungseinheit 6 angeschlossen, die für sich ansteuerbar ist; die energieverzehrenden Schaltungseinheiten 6 des Bremsstellers 2 sind also jeweils einzeln ansteuerbar. Die energieverzehrende Schaltungseinheit 6 besteht aus einem energieverzehrenden Element, z.B. einem Ohmschen Widerstand 7, der über ein Halbleiter-Leistungsschaltelement 8 an den Speicherkondensator 5 angeschlossen ist. Bei diesem bekannten Bremssteller sind also die energieverzehrenden Schaltungseinheiten 6 in den Bremssteller integriert. Der bekannte Bremssteller 2 weist einerseits einen äußeren Anschluss X1 und andererseits eine weiteren äußeren Anschluss X2 auf, der über eine konzentrierte oder verteilte Induktivität 9 mit der Reihenschaltung der Submodule 1 verbunden ist.

Die Speicherkondensatoren 6 sind relativ groß ausgebildet, so dass die jeweiligen Halbleiter-Leistungsschaltelemente 8 zeitversetzt angesteuert werden können. Der technische Anspruch an die Realisierung und das Schaltverhalten ist dadurch vergleichsweise gering, da keinerlei harte Reihenschaltung der Submodule 1 vorgenommen werden muss. Um einen regelbaren Stromfluss über den Bremssteller und damit einen Energieumsatz zu erreichen, werden die einzelnen Halbleiter-Leistungsschaltelemente 8 mit in der MMC (Modular Multilevel Converter)-Technik üblichen Verfahren angesteuert. Diese Verfahren können Sortieralgorithmen benutzen oder eine eigene Pulsweitenmodulation für jedes Submodul, beides mit dem Regelziel, alle Kondensatorspannungen annähernd gleich zu halten.

Ein solcher bekannter Bremssteller wird beispielsweise bei einem mit einem Wechselrichter verbundenen Gleichspannungs-Übertragungsnetz eingesetzt, um bei einem wechselstromseitigen Fehler im Wechselrichter die volle Leistung des Gleichspannungs-Übertragungsnetzes für einige wenige Sekunden abführen zu können. In dieser Zeit kann der wechselstromseitige Fehler geklärt und der Wechselrichter wieder in Betrieb genommen werden, ohne dass die in das Gleichspannungs-Übertragungsnetz einspeisenden Gleichrichter und die darüber einspeisenden Wechselstromnetze beeinträchtigt werden.

Aus der Offenlegungsschrift DE 10 2008 045 247 A1 ist ein Umrichter mit verteilten Bremswiderständen bekannt. Dabei sind die Bremswiderstände jeweils Teil eines bipolaren Submoduls. Die Submodule sind unter Ausbildung einer Submodulreihenschaltung in Reihe geschaltet.

Die Offenlegungsschrift DE 10 2012 220 388 A1 offenbart einen Umrichter mit mehreren in Reihe geschalteten Umrichterzellen. Jede Umrichterzelle weist eine Energiequelle zur Energieversorgung der Umrichterzelle und Halbleiterschalter zur Erzeugung einer positiven oder negativen Spannung am Ausgang der Umrichterzelle auf. Am Ausgang jeder Umrichterzelle ist ein Bypass-Schalter angeordnet, um im Falle einer defekten Umrichterzelle diese Umrichterzelle kurzzuschließen.

Die Schrift CN 102957378 A offenbart einen modularen Multilevelstromrichter, der eine Vielzahl von Submodulen aufweist. Die Submodule weisen jeweils leistungselektronische Bauteile, einen Kondensator und einen Widerstand auf. Mittels des Widerstands kann elektrische Energie in Wärmeenergie umgewandelt werden.

Aus dem Artikel "Projects BorWin2 and HelWin1 - Large Scale Multilevel Voltage-Sourced Converter Technology for Rundling of Offshore Windpower" von V. Hussennether et al, CIGRE 2012, 9. März 2012, XP055489887, und aus dem Artikel "Trans Bay Cable - A Breakthrough of VSC Multilevel Converters in HVDC Transmission" von J. Dorn et al, CIGRE 2012 San Francisco Colloquium, 9. März 2012, Seiten 2712-2720, XP055489881, ist eine Anlage zur Hochspannungsgleichstromübertragung bekannt, die Bremsstellermodule aufweist. Jedes Bremsstellermodul weist dabei einen individuellen Bremswiderstand auf.

Um das Submodul eines Bremsstellers der eingangs angegebenen Art so auszugestalten, dass der Bremssteller im Warte-/ Ruhezustand mit relativ geringen Verlustleistungen auskommt, ist erfindungsgemäß bei dem Submodul parallel zur Inversdiode ein aktiv schaltbarer Halbleiter-Bypasspfad vorhanden.

Die Erfindung wird durch die unabhängigen Ansprüchen definiert. Bevorzugte Ausführungsformen werden durch die abhängigen Ansprüche beschrieben.

Ein wesentlicher Vorteil des erfindungsgemäßen Submoduls besteht darin, dass aufgrund des aktiv schaltbaren Halbleiter-Bypasspfades ein mit einem solchen Submodul ausgerüsteter Bremssteller bezogen auf die Summe der Spannungen seiner Speicherkondensatoren als Hochsetzsteller betrieben werden kann. Der Speicherkondensator des erfindungsgemäßen Submoduls ist daher ein echter, steuerbarer Energiespeicher, so dass die Summe der Spannungen an den Speicherkondensatoren der Submodule eines Bremsstellers größer als die an den Außenanschlüssen des Bremsstellers anliegende Spannung sein kann. Ein weiterer Vorteil besteht darin, dass die Auslegung der energieverzehrenden Schaltungseinheit weitgehend unabhängig von der Spannung an den Außenanschlüssen des Bremsstellers erfolgen kann, so dass der Widerstandswert des aktiv schaltbaren Halbleiter-Bypasspfades einerseits besser und andererseits unabhängig von der anliegenden Spannung mit den Eigenschaften des ihn schaltenden Halbleiter-Schalters koordinierbar ist. Zusätzlich ergibt sich der Vorteil, dass die Inversdiode des erfindungsgemäßen Submoduls für kleinere Ströme ausgelegt werden kann.

Bei dem erfindungsgemäßen Submodul enthält der Halbleiter-Bypasspfad einen Leistungshalbleiter-Schalter. Vorzugsweise ist dieser Halbleiter-Leistungsschalter ein Bipolartransistor mit isolierter Gate-Elektrode (IGBT).

Auch hinsichtlich der energieverzehrenden Schaltungseinheit kann das Submodul in unterschiedlicher Weise ausgeführt sein. Bei einer vorteilhaften Ausführungsform ist die energieverzehrende Schaltungseinheit ein Ohmscher Widerstand, der über ein Leistungshalbleiter-Schaltelement parallel zu dem Speicherkondensator angeordnet ist. Dies bringt den Vorteil mit sich, dass der Halbleiter-Leistungsschalter und das Halbleiter-Leistungsschaltelemente jedes Submoduls besser ausgenutzt werden können; zudem eröffnet es die die Möglichkeit, bei der Zusammenfügung der Submodule zu einem Bremssteller mit weniger Submodulen auszukommen, was in vorteilhafter Weise zu einer Kostenreduktion und zu weniger Bauraumbedarf des Bremsstellers führt.

Es kann aber auch vorteilhaft sein, wenn die energieverzehrende Schaltungseinheit ein nichtlinearer Widerstand ist, der unmittelbar parallel zu dem Kondensator angeordnet ist; die energieverzehrende Schaltungseinheit ist hier also rein passiv ausgebildet. Das Halbleiter-Leistungsschaltelement ist hier also entfallen, was sich im Hinblick auf die Kosten und den Raumbedarf für das einzelne Submodul und damit auch für einen aus solchen Submodulen aufgebauten Bremssteller vorteilhaft auswirkt. Mit dieser Ausführungsform des erfindungsgemäßen Submoduls können die nichtlinearen Widerstände in den Submodulen über ein entsprechendes Ansteuern der Halbleiter-Leitungsschalter im Halbleiter-Bypasspfad im Verbund der Sub-module rein über Anheben bzw. Absenken der Spannung an den Speicherkondensatoren wirksam geschaltet bzw. eingeschaltet werden. Auch bei dieser Ausführungsform des erfindungsgemäßen Submoduls ergibt sich der Vorteil, dass die Halbleiter-Leistungsschalter und die Halbleiter-Leistungsschaltelemente besser ausgelegt werden können und somit Submodule eingespart werden können.

Als besonders vorteilhaft hat es sich erwiesen, wenn das energieverzehrende Schaltungselement in Form eines nichtlinearen Widerstandes ein Überspannungsableiter ist.

Bei einem mit solchen Submodulen gebildeten Bremssteller lässt sich die umgesetzte Leistung steigern, je mehr Submodule im zeitlichen Mittel auf eine Kondensatorspannung gesteuert werden, bei der der nichtlineare Widerstand bzw. Überspannungsableiter leitend wird.

Um einen Bremssteller mit relativ geringer Verlustleistung zu gewinnen, ist erfindungsgemäß ein an ein Gleichspannungs-Übertragungssystem angeschlossener Bremssteller aus mehreren in Reihe liegenden Submodulen erfindungsgemäßer Ausbildung aufgebaut, wie sie oben im Einzelnen beschrieben sind.

Ein solcher Bremssteller ist unter anderem insofern vorteilhaft, als er als minimalen Widerstand die Summe aller Widerstände der energieverzehrenden Schaltungseinheiten aufweisen kann. In diesem Falle sind dann bei Verwendung von Submodulen mit energieverzehrenden Schaltungseinheiten mit jeweils einem Halbleiter-Leistungsschaltelement alle diese Schaltelemente eingeschaltet. Der kleinste Widerstand des erfindungsgemäßen Bremsstellers ist Null, wenn alle Halbleiter-Leistungsschalter im Halbleiter-Bypasspfad eingeschaltet werden. Es ist somit in vorteilhafter Weise möglich, den Strom durch den Bremssteller vergleichsweise schnell aufzubauen.

Das gleiche gilt für den Fall, dass ein Strom durch den Bremssteller schnell abgebaut werden soll. In diesem Falle kann die Spannung der Speicherkondensatoren stationär erheblich größer gehalten werden als die Gleichspannung an den Außenanschlüssen des Bremsstellers. Es kann jederzeit eine hohe Gegenspannung aufgebaut werden und ein durch den Bremssteller fließender Strom schnell abkommutiert werden.

Bei dem erfindungsgemäßen Bremssteller ist in Reihe zu den in Reihe angeordneten Submodulen eine ergänzende, energieverzehrende Schaltungseinheit vorgesehen. In diesem Falle ist jedes Submodul relativ einfach zu dimensionieren, weil die Spannung am erfindungsgemäßen Bremssteller in einem weiten Bereich einstellbar ist. Diese ergänzende energieverzehrende Schaltungseinheit ist eine Widerstandsanordnung. Sie ist hier durch die nahezu stufenlose Stellbarkeit der Spannung am Bremssteller relativ geringen Pulsbelastungen ausgesetzt. Die ergänzende, energieverzehrende Widerstandsanordnung kann deshalb vergleichsweise günstig realisiert werden. Außerdem können die Kosten weiter gesenkt werden, weil die ergänzende, energieverzehrende Widerstandsanordnung bezogen auf ihre Leistung kostengünstiger als die Widerstände oder Überspannungsableiter der Submodule ist. Diese ergänzende, energieverzehrende Widerstandsordnung kann vorteilhafterweise außerhalb einer den Bremssteller aufnehmenden Konverterhalle platziert werden, wodurch die Konverterhalle und ihre Kühlanlagen kleiner dimensioniert werden können.

Ein weiterer Vorteil des erfindungsgemäßen Bremsstellers besteht darin, dass er im stationären und auch im blockierten Zustand sehr günstig zu symmetrieren ist, da der Querstrom durch den Bremssteller nicht alle Widerstände der Submodule des Bremsstellers durchlaufen muss. Dadurch sinkt die Verlustleistung des Bremsstellers im Leerlauf. Die Widerstände der energieverzehrenden Schaltungseinheiten werden im Übrigen nicht durch Symmetrieren des Bremsstellers vorerwärmt und können dadurch mehr Energie aufnehmen als bei dem eingangs beschriebenen, bekannten Bremssteller.

Bei einer besonders vorteilhaften Ausführungsform des erfindungsgemäßen Bremsstellers sind eine Messeinrichtung für den Strom durch die in Reihe liegenden Submodule des Bremsstellers und Messvorrichtungen für die Spannungen an den Submodulen mit einer Steueranordnung verbunden, die geeignet ist, bei einem Fehler an dem Wechselrichter Steuersignale an die Leistungshalbleiter-Schalter der Submodule zur Einstellung der Spannungen an den Submodulen entsprechend einem Optimierungskriterium abzugeben. Dies geschieht bei einem an einen Wechselrichter angeschlossenen Bremssteller dann, wenn ein wechselstromseitiger Fehler in einem an den erfindungsgemäßen Bremssteller angeschlossenen Wechselrichter aufgetreten ist.

Vorteilhaft ist die eben behandelte Ausführungsform des erfindungsgemäßen Bremsstellers vor allem deshalb, weil bei ihr die Gesamtverluste in den Submodulen und damit der Gesamtverlust des Bremsstellers verhältnismäßig gering und seine maximale Leistung relativ hoch sind. Dies ist darauf zurück zu führen, dass die Temperatur des jeweils heißesten Halbleiter-Leistungsschalters reduziert wird und so die maximale Leistung des jeweiligen Submoduls und damit des gesamten Bremsstellers erhöht werden kann. Bei einer optimalen Anpassung der Spannung der Submodule bzw. der Spannung an den Speicherkondensatoren kann die maximale Leistung des Bremsstellers um bis zu 20% gegenüber einer Ausführung ohne optimale Anpassung der Submodulspannung. erhöht werden.

Die Erfindung betrifft ferner ein Verfahren zum Betreiben eines Bremsstellers der oben beschriebenen, erfindungsgemäßen Ausführung bei einem Fehler in einem das Gleichspannungs-Übertragungsnetz angeschlossenen Wechselrichter und stellt sich die Aufgabe, dieses Verfahren so auszugestalten, dass die Gesamtverluste in den Submodulen und damit der Gesamtverlust des Bremsstellers verhältnismäßig gering und maximale Leistung relativ hoch sind.

Zur Lösung dieser Aufgabe werden erfindungsgemäß der Strom durch die in Reihen liegenden Submodule und die Spannungen an den einzelnen Submodulen ermittelt werden, und aus den ermittelten Werten für den Strom und die Spannungen an den Submodulen wird ein aktueller Arbeitspunkt des jeweiligen Submoduls festgestellt; im Hinblick auf mindestens ein vorgegebenes Optimierungskriterium für den Bremssteller werden anhand des jeweils aktuellen Arbeitspunktes die Spannungen an den Submodulen durch Schalten des aktiv schaltbaren Halbleiter-Bypasspfades oder der energieverzehrenden Schaltungseinheit entsprechend dem Optimierungskriterium angepasst. Die energieverzehrende Schaltungseinheit muss dabei selbstverständlich jeweils schaltbar sein, also einen Ohmschen Widerstand enthalten, der über ein Leistungshalbleiter-Schaltelement parallel zu dem jeweiligen Speicherkondensator schaltbar ist.

Ein wesentlicher Vorteil des erfindungsgemäßen Verfahrens wird darin gesehen, dass die Temperatur des jeweils heißesten Halbleiter-Leistungsschalters reduziert wird und so die Leistung des jeweiligen Submoduls und damit die Leistung des gesamten Bremsstellers erhöht werden kann. Bei einer optimalen Anpassung der Submodulspannung kann die maximale Leistung des Bremsstellers um bis zu 20% erhöht werden. Dabei ist die Verlustleistung relativ gering.

Bei dem erfindungsgemäßen Verfahren werden bei einem das Temperaturverhalten der Halbleiter-Leistungsschalter und der Halbleiter-Leistungsschaltelemente und der Inversdiode sowie der Freilaufdiode als Halbleiter-Bauelemente der Submodule berücksichtigendem Optimierungskriterium anhand des jeweiligen Arbeitspunktes der Halbleiter-Bauelemente für verschiedene Spannungen Schalt- und Leitverluste der Halbleiter-Bauelemente des jeweiligen Submoduls berechnet und Temperaturhübe der Halbleiter-Bauelemente sowie die Temperaturen der Halbleiter-Bauelemente bei einem Fehler in Abhängigkeit von der Fehlerdauer bestimmt; für den jeweiligen Arbeitspunkt jedes Halbleiter-Bauelements der Submodule wird anschließend der Temperaturabstand zur maximal zulässigen Sperrschichttemperatur des jeweiligen Halbleiter-Bauelements bei den möglichen Spannungen an den Submodulen bestimmt, und es werden mittels einer Zielfunktion optimale Spannungen an den Submodulen eingestellt.

Dabei wird als Zielfunktion in vorteilhafter Weise bei einem das Temperaturverhalten der Halbleiter-Bauelemente der Submodule berücksichtigendem Optimierungskriterium anhand des jeweiligen Arbeitspunktes der Halbleiter-Bauelemente für verschiedene Spannungen Schalt- und Leitverluste der Halbleiter-Bauelemente des jeweiligen Submoduls berechnet und Temperaturhübe der Halbleiter-Bauelemente sowie die Temperaturen der Halbleiter-Bauelemente bei einem Fehler in Abhängigkeit von der Fehlerdauer bestimmt; für den jeweiligen Arbeitspunkt jedes Halbleiter-Bauelements der Submodule wird der Temperaturabstand zur maximal zulässigen Sperrschichttemperatur des jeweiligen Halbleiter-Bauelements bei den möglichen Spannungen an den Submodulen bestimmt, und werden mittels einer Zielfunktion optimale Spannungen an den Submodulen eingestellt.

Dabei können unabhängig von der Art des Optimierungskriteriums die Temperaturhöhe der Halbleiter-Bauelemente sowie die Temperatur der Halbleiter-Bauelemente mittels eines thermischen Modells bestimmt werden.

Als weiteres Optimierungskriterium können in vorteilhafter Weise die Temperaturhübe der Halbleiter-Bauelemente sowie die Temperaturen der Halbleiter-Bauelemente bei einem Fehler mittels eines thermischen Modells bestimmt werden.

Als Optimierungskriterien können zusätzlich oder alternativ ein minimaler Ripple der Spannungen an den Submodulen, eine gleiche mittlere Temperatur der Halbleiter-Bauelemente oder eine Mischung dieser beiden Optimierungskriterien verwendet werden. Auch andere Optimierungskriterien sind bei dem erfindungsgemäßen Verfahren verwendbar.

Zur weiteren Erläuterung der Erfindung ist in

Fig. 2 ein Ausführungsbeispiel eines erfindungsgemäßen Bremsstellers, in

Fig.3 eine weitere Ausführungsform eines Submoduls für den erfindungsgemäßen Bremssteller, und in

Fig.4 ein Beispiel einer Graphik mit einem minimalen Temperaturdelta zu der maximal zulässigen Sperrschichttemperatur ($T_{j,\,HLj}$ mit j = 1...4) der Submodule nach einer 2 Sekunden dauernden Belastung bei einem ein Temperaturverhalten berücksichtigendem Optimierungskriterium und in

Fig.5 ein vereinfachtes Flussdiagramm eines Algorithmus zur Variation der Kondensatorspannungen anhand von Optimierungskriterien dargestellt.

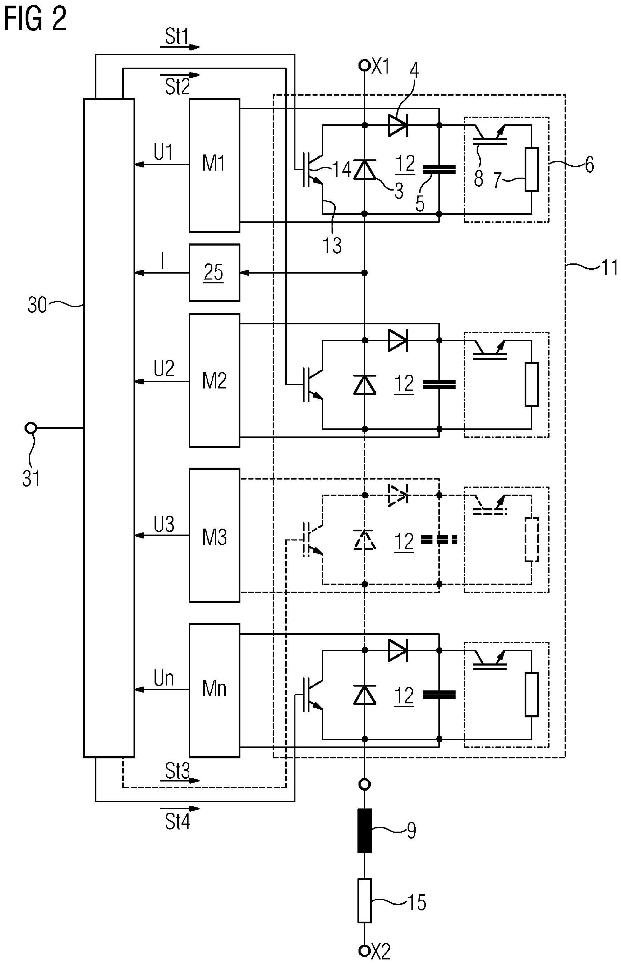

Die Fig. 2, in der mit dem Bremssteller nach Fig. 1 übereinstimmende Komponenten mit denselben Bezugszeichen versehen sind, zeigt einen Bremssteller 11 mit mehreren Submodulen 12, die jeweils eine Inversdiode 3 enthalten. Parallel zur Inversdiode 3 verläuft ein aktiv schaltbarer Halbleiter-Bypasspfad 13, der im vorliegenden Fall von einem Halbleiter-Leistungsschalter 14 gebildet ist.

In jedem Submodul 12 ist - wie beim obigen Stand der Technik - über eine Freilaufdiode 4 ein Speicherkondensator 5 angeschlossen, zu dem parallel eine energieverzehrende Schaltungseinheit 6 liegt. Die energieverzehrende Einheit 6 besteht auch hier aus der Reihenschaltung eines Halbleiter-Leistungsschaltelements 8 mit einem energieverzehrenden Element, z.B. einem Ohmschen Widerstand 7.

Wie die Figur 2 ferner zeigt, ist enthält der Bremssteller 11 in üblicher Weise eine Induktivität 9 und eine ergänzende, energieverzehrende Widerstandsanordnung 15, deren einer Anschluss einen äußeren Anschluss X2 des Bremsstellers 11 bildet.

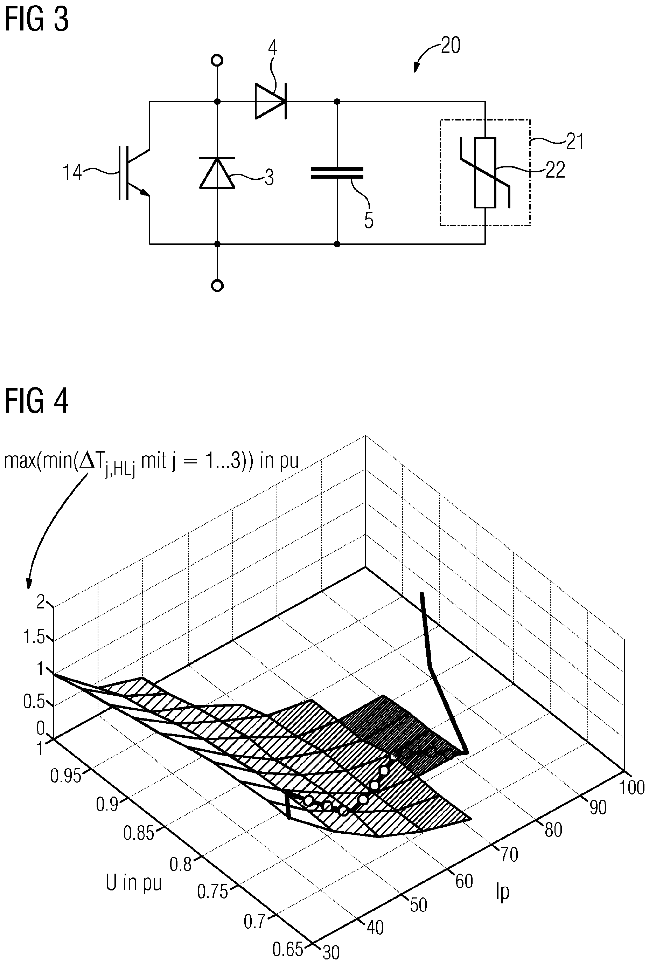

Figur 3 zeigt ein Submodul 20, das gegenüber den in dem Bremssteller 11 nach Figur 2 eingesetzten Submodulen 12 insofern abgeändert ist, als eine energieverzehrende Schaltungseinheit 21, die auch hier parallel zu dem Speicherkondensator 5 liegt, aus einem nichtlinearen Widerstand 22 oder einem Überspannungsableiter besteht, also nur passiv schaltbar ist.

In Fig. 2 ist ferner dargestellt, dass bei dem Bremssteller 11 der Strom durch die in Reihe liegenden Submodule 12 mittels einer Messeinrichtung 25 und die Spannungen an den einzelnen Submodulen 12 bzw. an den Speicherkondensatoren 5 mit Hilfe von Messvorrichtungen M1 bis Mn ermittelt werden. Die so ermittelten Werte I für den Strom und die Werte U1 bis Un für die Spannungen an den Speicherkondensatoren 5 werden in einer Steueranordnung 30 verarbeitet. Diese Steueranordnung wird über einen Anschluss 31 aktiviert, wenn beispielsweise in einem an den Bremssteller 11 angeschlossenen Wechselrichter wechselstromseitig ein Fehler aufgetreten ist. Es wird hier ein aktueller Arbeitspunkt des jeweiligen Submoduls 12 festgestellt. Wie unten noch näher beschrieben ist, können unterschiedliche Optimierungskriterien eingesetzt werden, um für den Bremssteller 11 anhand des jeweils aktuellen Arbeitspunktes die Spannungen an den Submodulen 12 durch Schalten des aktiv schaltbaren Halbleiterbypasses 13 anzupassen.

Diese Anpassung kann auf folgende Weise erfolgen: Der erste Schritt ist die Bestimmung des Arbeitspunktes anhand der Messung des Stromes durch den Bremssteller 11 unter Gewinnung der Messgröße I und der Spannungen an den Submodulen 12 unter Gewinnung der Werte U1 bis Un. Daraus wird anhand einer Online oder Off-line Berechnung der jeweils zu erwartenden Temperaturen der Halbleiter-Bauelemente (Halbleiter-Leistungsschalter 14, Halbleiter-Leistungsschaltelement 8, Inversdiode 3 und Freilaufdiode 4) nach einem Fehler von x Sekunden Dauer der Arbeitspunkt bestimmt. Basierend darauf werden die optimalen Sollwerte für die Spannungen an den Submodulen 12 des Bremsstellers 11 sowie der Aussteuergrad des Halbleiter-Leistungsschalters 14 und des Halbleiter-Leistungsschaltelements 8 anhand einer Zielfunktion berechnet und entsprechende Steuersignale St1 bis Stn von der Steueranordnung an die Halbleiter-Leistungsschalter 14 abgegeben.

Bei Off-line Berechnungen wird eine Tabelle mit den unterschiedlichen Temperaturen ($T_{j,\,HLj}$ mit j = 1...4) der Halbleiter-Bauelemente 3,4,8 und 14 der Submodule 12 nach einem x Sekunden dauernden Fehler in einem an den Bremssteller 11 angeschlossen, nicht figürlich gezeigten Wechselrichter bei unterschiedlichen Spannungen an den Submodulen 12 bei jedem Arbeitspunkt sowie für das Design eines jeweils als Vergleichsmaßstab ausgewählten Submoduls angefertigt.

Anhand des aktuellen Arbeitspunktes wird das Temperaturdelta zu der maximal zulässigen Sperrschichttemperatur ($\Delta T_{j,HLj}$) von jedem Halbleiterbauelement j = 3,4,8 und 14 der Submodule 12 für jede mögliche Spannung der Submodule 12 des Bremsstellers 11 berechnet:

$$\Delta T_{j,HLj} = T_{j,max} - T_{j,HLj} \quad \text{mit } j = 1...4 \qquad (1)$$

Eine mögliche Zielfunktion (ZF) ist die Maximierung dieses Temperaturdeltas zu der maximal zulässigen Sperrschichttemperatur des heißesten Halbleiterbauelements:

$$ZF = \max\left(\min\left(\Delta T_{j,HLj} \quad \text{mit } j = 1...4\right)\right) \qquad (2)$$

Bei On-line Berechnungen werden die Schalt- und Leitverluste der Halbleiterbauelemente 3,4,8 und 14 der Submodule 12 anhand des Arbeitspunktes für verschiedene Spannungen der Sub-module 12 des Bremsstellers 11 berechnet. Anhand eines vereinfachten thermischen Modells (z.B. nur ein thermisches RC Glied) werden die Temperaturhübe sowie die Temperaturen ($T_{j,HLj}$ mit j = 1...14) der Halbleiterbauelemente 3,4,8 und 14 nach einem x Sekunden während Fehler im Wechselrichter berechnet. Anhand des aktuelle Arbeitspunktes werden das Temperaturdelta zu der maximal zulässigen Sperrschichttemperatur ($\Delta T_{j,HLj}$) jedes Halbleiterbauelements 3,4,8, und 14 für jede mögliche Spannung der Submodule 12 des Bremsstellers 11 berechnet und dann anhand einer Zielfunktion die optimalen Spannungen der Submodule 12 gewählt.

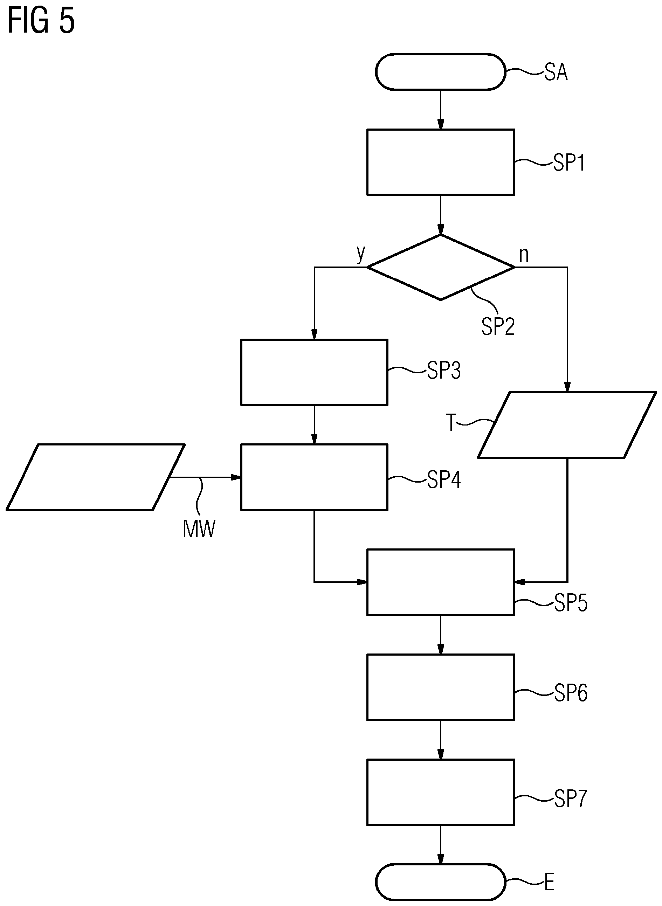

Eine mögliche Zielfunktion (ZF) ist hier die Maximierung des Temperaturdeltas zu der maximal zulässigen Sperrschichttemperatur des heißesten Halbleiterbauelements 3,4,8 oder 14. Das in Fig.5 gezeigte Flussdiagramm zeigt den Ablauf eines solchen Prozesses. Bei dem dargestellten Prozess erfolgt nach einem Start SA in einem Schritt Sp1 eine Bestimmung des Arbeitspunktes anhand der aktuell benötigten Bremsleistung anhand der Werte I für den Strom und die Spannungen an den Speicherkondensatoren U1 bis Un. Danach erfolgt in einem Schritt Sp2 eine Entscheidung, ob eine Online-Berechnung durchgeführt werden soll oder nicht. Bei positiver Entscheidung y wird anschließend in einem weiteren Schritt Sp3 eine Berechnung von Leit- und Schaltverlusten für unterschiedliche Kondensatorspannungen durchgeführt. Daran schließt sich in einem Schritt Sp4 eine Berechnung der Halbleitertemperaturen $T_{j,HLj}$ mit j = 1...14 mit einem vereinfachten thermischen Modell an, wobei die gemessenen Kondensatorspannungen U1 bis Un und die Halbleitertemperaturen berücksichtigt werden.

In einem nachfolgen Schritt Sp5 wird eine neue Sperrschichttemperatur der Halbleiter in den Submodulen 1 ermittelt.

Bei negativer Entscheidung n im Schritt Sp2 wird zu einer Tabelle T verzweigt, in der die Temperatur von jedem Halbleiter der Submodule 1 nach einem Fehler mit einer Dauer von x Sekunden für jeden Arbeitspunkt bei unterschiedlichen Kondensatorspannungen U1 bis Un abgelegt ist; dabei ist eine Anpassung an das jeweilige Design der Submodule vorgenommen. Auf diese Weise ist auch hier eine neue Sperrschichttemperatur im Schritt Sp5 ermittelbar.

Anschließend wird in einem weiteren Schritt SP6 eine Berechnung der Delta zur maximalen Sperrschichttemperatur eines jeden Halbleiters vorgenommen und nachfolgend in einem Schritt SP7 eine Anpassung der jeweiligen Kondensatorspannung anhand von Optimierungskriterien, z.B. gemäß obiger Beziehung (2), durchgeführt. Mit E ist das Ende der Maximierung des Temperaturdeltas bezeichnet.

Natürlich sind andere Optimierungskriterien für die Off-line-Berechnung oder die On-line-Berechnung denkbar, wie z.B. minimaler Spannungsripple der Spannung an den Submodulen 12 bzw. dem Speicherkondensator 5, gleiche mittlere Temperatur der Halbleiter-Bauelemente 3,4,8 und 14, usw. oder gewichtete Mischungen von Kriterien, die anhand einer Zielfunktion beschreibbar sind.

Fig. 4 zeigt eine Beispielgraphik mit dem minimalen Temperaturdelta zu der maximal zulässigen Sperrschichttemperatur ($T_{j,HLj}$ mit j = 1...4) der Submodule 12 nach einem 2 Sekunden dauernden Fehler im Wechselrichter bei unterschiedlichen Spannungen der Submodule 12 des Bremsstellers 11. Die gezeigte Fläche beschreibt die Maximierung des minimalen Deltas zu der maximal zulässigen Sperrschichttemperatur für das heißeste Bauelement für unterschiedliche Spannungen U der Submodule 12 sowie die unterschiedlichen Ströme Ip, die maximal für die Halbleiterbauelemente erlaubt sind; dabei ist mit Ip ein Strom in Prozent vom Nominalwert bezeichnet. Die gestrichelte Linie in Fig. 4 zeigt die optimale Auswahl der Spannungen der Submodule 12 für den Bremssteller 11. Es ist zu erkennen, dass bei der Nutzung von festen Submodulspannungen maximal nur 80% des möglichen Stromes - bzw. der möglichen Leistung genutzt werden könnten.

## Patentansprüche

1. Bremssteller (11) mit mehreren in Reihe angeordneten Submodulen (12), wobei jedes Submodul (12) eine Inversdiode (3) und einen dazu über eine Freilaufdiode (4) parallel liegenden Speicherkondensator (5) sowie eine an den Speicherkondensator (5) angeschlossene, energieverzehrende Schaltungseinheit (6) aufweist, wobei

   parallel zur Inversdiode (3) ein aktiv schaltbarer Halbleiter-Bypasspfad (13) von der Kathode zur Anode der Inversdiode (13) vorhanden ist, und in Reihe zu den in Reihe angeordneten Submodulen (12) eine Induktivität (9) und als eine ergänzende energieverzehrende Schaltungseinheit (15) eine Widerstandsanordnung geschaltet ist,
   wobei der Halbleiter-Bypasspfad (13) einen Leistungshalbleiter-Schalter (14) enthält,
   wobei der Bremssteller (11) eine Steueranordnung umfasst, die dazu ausgelegt ist, Steuersignale an die Leistungshalbleiter-Schalter (14) der Submodule abzugegeben, so dass dabei der Bremssteller bezogen auf die Summe der Spannungen seiner Speicherkondensatoren als Hochsetzsteller betrieben wird.

2. Bremssteller nach Anspruch 1, **dadurch gekennzeichnet, dass** der Leistungshalbleiter-Schalter (14) ein Bipolartransistor mit isolierter Gate-Elektrode (insulated-gate bipolar transistor, IGBT) ist.

3. Bremssteller nach einem der Ansprüche 1 bis 2, **dadurch gekennzeichnet, dass** die energieverzehrende Schaltungseinheit einen ohmschen Widerstand (7) enthält, der über ein Leistungshalbleiter-Schaltelement (8) parallel zu dem Speicherkondensator (5) angeordnet ist.

4. Bremssteller nach Anspruch 3, **dadurch gekennzeichnet, dass** das Leistungshalbleiter-Schaltelement (8) ein Bipolartransistors mit isolierter Gate-Elektrode (IGBT) ist.

5. Bremssteller nach einem der Ansprüche 1 bis 2, **dadurch gekennzeichnet, dass** die energieverzehrende Schaltungseinheit (21) ein nichtlinearer Widerstand (22) ist, der unmittelbar parallel zu dem Speicherkondensator (5) angeordnet ist.

6. Bremssteller nach Anspruch 5 **dadurch gekennzeichnet, dass** der nichtlineare Widerstand ein Überspannungsableiter ist.

7. Bremssteller nach einem der Ansprüche 1 bis 6, **dadurch gekennzeichnet, dass** der Bremssteller an ein Gleichspannungs-Übertragungssystem angeschlossen ist.

8. Bremssteller nach einem der Ansprüche 1 bis 7, **dadurch gekennzeichnet, dass** eine Messeinrichtung (25) für den Strom durch die in Reihe liegenden Submodule (12) des Bremsstellers (11) und Messvorrichtungen (M1 bis Mn) für die Spannungen an den Submodulen (12) mit der Steueranordnung (30) verbunden sind, die geeignet ist, Steuersignale (St1 bis Stn) an die Leistungshalbleiter-Schalter (14) der Submodule (12) zur Einstellung der Spannungen an den Submodulen (12) entsprechend einem Optimierungskriterium abzugeben.

9. Verfahren zum Betreiben eines Bremsstellers (11) nach Anspruch 7 oder 8 bei einem Fehler in einem an das Gleichspannungsübertragungs-System angeschlossenen Wechselrichter, **dadurch gekennzeichnet, dass** der Strom durch die in Reihen liegenden Submodule (12) und die Spannungen an den einzelnen Submodulen (12) ermittelt werden,

aus den ermittelten Werten (I;U1 bis Un) für den Strom und die Spannungen an den Submodulen (12) ein aktueller Arbeitspunkt des jeweiligen Submoduls (12) festgestellt wird und im Hinblick auf mindestens ein vorgegebenes Optimierungskriterium für den Bremssteller (11) anhand des jeweils aktuellen Arbeitspunktes die Spannungen an den Submodulen (12) durch Schalten des aktiv schaltbaren Halbleiter-Bypasspfades (13) oder der energieverzehrenden Schaltungseinheit (6) entsprechend dem Optimierungskriterium angepasst werden, wobei bei dem das Temperaturverhalten der Leistungshalbleiter-Schalter (14), der Inversdiode (3) sowie der Freilaufdiode (4) als Halbleiter-Bauelemente der Submodule (12) berücksichtigendem Optimierungskriterium anhand des jeweiligen Arbeitspunktes der Halbleiter-Bauelemente für verschiedene Spannungen Schalt- und Leitverluste der Halbleiter-Bauelemente des jeweiligen Submoduls (12) berechnet werden,
Temperaturhübe der Halbleiter-Bauelemente sowie die Temperaturen der Halbleiter-Bauelemente bei dem Fehler in Abhängigkeit von der Fehlerdauer bestimmt werden,
für den jeweiligen Arbeitspunkt jedes Halbleiter-Bauelements der Submodule der Temperaturabstand zur maximal zulässigen Sperrschichttemperatur des jeweiligen Halbleiter-Bauelements bei den möglichen Spannungen an den Submodulen (12) bestimmt wird und
mittels einer Zielfunktion optimale Spannungen an den Submodulen (12) eingestellt werden, wobei als Zielfunktion eine Maximierung des Temperaturabstands der Sperrschichttemperatur des am stärksten erwärmten Halbleiter-Bauelements in einem Submodul (12) zu der maximal zulässigen Sperrschichttemperatur dieses Halbleiter-Bauelements verwendet wird.

10. Verfahren nach Anspruch 9, **dadurch gekennzeichnet, dass** die Temperaturhübe der Halbleiter-Bauelemente sowie die Temperaturen der Halbleiter-Bauelemente bei dem Fehler mittels eines thermischen Modells bestimmt werden.

11. Verfahren nach Anspruch 10, **dadurch gekennzeichnet, dass** als Optimierungskriterium ein minimaler Ripple der Spannungen an den Submodulen (12), eine gleiche mittlere Temperatur der Halbleiter-Bauelemente oder eine Mischung dieser beiden oder anderen Optimierungskriterien verwendet wird.

**Claims**

1. Braking unit (11) having multiple sub-modules (12) that are arranged in series, wherein each sub-module (12) comprises an inverse diode (3) and a storage capacitor (5) that is arranged in parallel with said inverse diode by way of a free-wheel diode (4) and also an energy-consuming switching unit (6) that is connected to the storage capacitor (5), wherein

    an actively switchable semi-conductor bypass path (13) from the cathode to the anode of the inverse diode (13) is provided in parallel with the inverse diode (3), and an inductance (9) and, as an additional energy-consuming switching unit (15), a resistor arrangement are connected in series with the sub-modules (12) arranged in series, wherein the semi-conductor bypass path (13) comprises a power semi-conductor switch (14),
    wherein the braking unit (11) comprises a control arrangement which is designed to output control signals to the power semi-conductor switches (14) of the sub-modules, with the result that the braking unit is operated in this case as a boost converter with regard to the sum of voltages of its storage capacitors.

2. Braking unit according to Claim 1, **characterized in that**
the power semi-conductor switch (14) is a bipolar transistor having an insulated gate electrode (insulated-gate bipolar transistor, IGBT).

3. Braking unit according to any one of Claims 1 to 2, **characterized in that**
the energy-consuming switching unit comprises an ohmic resistor (7) that is arranged in parallel with the storage capacitor (5) by way of a power semi-conductor switching element (8).

4. Braking unit according to Claim 3,
**characterized in that**
the power semi-conductor switching element (8) is a bipolar transistor having an insulated gate electrode (IGBT).

5. Braking unit according to any one of Claims 1 to 2, **characterized in that**
the energy-consuming switching unit (21) is a non-linear resistor (22) that is arranged directly in parallel with the storage capacitor (5).

6. Braking unit according to Claim 5,
**characterized in that**
the non-linear resistor is an overvoltage arrestor.

7. Braking unit according to any one of Claims 1 to 6, **characterized in that**
the braking unit is connected to a DC transmission system.

8. Braking unit according to any one of Claims 1 to 7, **characterized in that**
a measuring device (25) for the current flowing through the sub-modules (12) of the braking unit (11) that are arranged in series and measuring devices (M1 to Mn) for the voltages at the sub-modules (12) are connected to the control arrangement (30) that is suitable for outputting control signals (St1 to Stn) to the power semi-conductor switches (14) of the sub-modules (12) for adjusting the voltages at the sub-modules (12) according to an optimization criterion.

9. Method for operating a braking unit (11) according to Claim 7 or 8 in the event of a fault in an inverter that is connected to the DC transmission system,
**characterized in that**

    the current flowing through the sub-modules (12) that are arranged in series and the voltages at the individual sub-modules (12) are determined,
    a prevailing working point of the respective sub-module (12) is established from the ascertained values (I;U1 to Un) for the current and the voltages at the sub-modules (12) and, with respect to at least one predetermined optimization criterion for the braking unit (11) with reference to the respective prevailing working point, the voltages at the sub-modules (12) are adjusted by switching the actively switchable semi-conductor bypass path (13) or the energy-consuming switching unit (6) according to the optimization criterion, wherein, in the case of the optimization criterion that takes into consideration the temperature behaviour of the power semi-conductor switches (14), the inverse diode (3) and also of the free-wheel diode (4) as semi-conductor components of the sub-modules (12) with reference to the respective working point of the semi-conductor components for different voltages, switching and conductive losses of the semi-conductor components of the respective sub-modules (12) are calculated,

temperature increases of the semi-conductor components and also the temperatures of the semi-conductor components are determined in the event of the fault in dependence upon the duration of the fault,

for the respective working point of each semi-conductor component of the sub-modules, the temperature difference with respect to the maximal admissible depletion layer temperature of the respective semi-conductor component is determined in the case of the possible voltages at the sub-modules (12), and

using an objective function, optimal voltages are set at the sub-modules (12), wherein

a maximization of the temperature difference between the depletion layer temperature of the hottest semi-conductor component in a sub-module (12) and the maximal admissible depletion layer temperature of this semi-conductor component is used as an objective function.

**10.** Method according to Claim 9,
**characterized in that**
in the event of the fault, the temperature increases of the semi-conductor components and also the temperatures of the semi-conductor components are determined using a thermal model.

**11.** Method according to Claim 10,
**characterized in that**
a minimal ripple in the voltages at the sub-modules (12), an identical mean temperature of the semi-conductor components or a mixture of these two or other optimization criteria is used as an optimization criterion.

**Revendications**

**1.** Ajusteur (11) de commande de frein comprenant plusieurs sous-modules (12) montés en série, dans lequel chaque sous-module (12) comporte une diode (3) inverse et un condensateur (5) d'accumulation en parallèle avec celle-ci, par l'intermédiaire d'une diode (4) de roue libre, ainsi qu'une unité (6) de circuit raccordée au condensateur (5) d'accumulation et consommant de l'énergie, dans lequel

il y a, en parallèle à la diode (3) inverse, un chemin (13) de dérivation à semiconducteur, pouvant être commuté de manière active, allant de la cathode à l'anode de la diode (13) inverse, et

il est monté, en série avec les sous-modules (12) montés en série, une inductance (9) et, comme unité (15) de circuit complémentaire consommant de l'énergie, un montage de résistance,

dans lequel le chemin (13) de dérivation à semiconducteur comporte un interrupteur (14) à semiconducteur de puissance,

dans lequel l'ajusteur (11) de commande de frein comprend un dispositif de commande, qui est conçu pour envoyer des signaux de commande aux interrupteurs (14) à semiconducteur de puissance des sous-modules, de manière à faire ainsi fonctionner l'ajusteur de commande de frein, rapporté à la somme des tensions de ses condensateurs d'accumulation, comme convertisseur élévateur.

**2.** Ajusteur de commande de frein suivant la revendication 1, **caractérisé en ce que**
l'interrupteur (14) à semiconducteur de puissance est un transistor bipolaire à électrode de grille isolée (insulated gate bipolar transistor, IGBT).

**3.** Ajusteur de commande de frein suivant l'une des revendications 1 à 2,
**caractérisé en ce que**
l'unité de circuit consommant de l'énergie comporte une résistance (7) ohmique, qui, par l'intermédiaire d'un élément (8) de coupure à semiconducteur de puissance, est montée en parallèle avec le condensateur (5) d'accumulation.

**4.** Ajusteur de commande de frein suivant la revendication 3, **caractérisé en ce que**
l'élément (8) de coupure à semiconducteur de puissance est un transistor bipolaire à électrode de grille isolée (IGBT).

**5.** Ajusteur de commande de frein suivant l'une des revendications 1 à 2,
**caractérisé en ce que**
l'unité (21) de circuit consommant de l'énergie est une résistance (22) non linéaire, qui est montée directement en parallèle avec le condensateur (5) d'accumulation.

6. Ajusteur de commande de frein suivant la revendication 5, **caractérisé en ce que**
la résistance non linéaire est un parafoudre.

7. Ajusteur de commande de frein suivant l'une des revendications 1 à 6,
**caractérisé en ce que**
l'ajusteur de commande de frein est raccordé à un système de transmission en tension continue.

8. Ajusteur de commande de frein suivant l'une des revendications 1 à 7,
**caractérisé en ce qu'**
un dispositif (25) de mesure du courant passant dans les sous-modules (12) montés en série de l'ajusteur (11) de commande de frein et des dispositifs (M1 à Mn) de mesure des tensions aux bornes des sous-modules (12) sont reliés au dispositif (30) de commande, qui est propre à envoyer des signaux (St1 à Stn) de commande aux interrupteurs (14) à semiconducteur de puissance des sous-modules (12) pour le réglage des tensions aux bornes des sous-modules (12), conformément à un critère d'optimisation.

9. Procédé pour faire fonctionner un ajusteur (11) de commande de frein suivant la revendication 7 ou 8,

dans lequel, s'il y a un défaut dans un onduleur raccordé au système de transmission en tension continue, le procédé est **caractérisé en ce que** l'on détermine le courant passant dans les sous-modules (12) montés en série et les tensions aux bornes des sous-modules (12) individuels,
à partir des valeurs (I ; U1 à Un) déterminées du courant et des tensions aux bornes des sous-modules (12), on fixe un point de travail en cours du sous-module (12) respectif et, en vue d'au moins un critère d'optimisation donné à l'avance de l'ajusteur (11) de commande de frein, on adapte, conformément au critère d'optimisation, à l'aide du point de travail respectivement en cours, les tensions aux bornes des sous-modules (12) en mettant en circuit le chemin (13) de dérivation à semiconducteur pouvant être commuté de manière active ou l'unité (6) de circuit consommant de l'énergie, dans lequel on calcule le critère d'optimisation prenant en compte le comportement en température des interrupteurs (14) à semiconducteur de puissance, des diodes (3) inverses ainsi que des diodes (4) de roue libre comme composants à semiconducteur des sous-modules (12), à l'aide du point de travail respectif des composants à semiconducteur pour diverses pertes de tension par commutation et conduction des composants à semiconducteur du sous-module (12) respectif,
on détermine des élévations de températures des composants à semiconducteur ainsi que les températures des composants à semiconducteur en cas de défaut, en fonction de la durée du défaut, on détermine, pour le point de travail respectif de chaque composant à semiconducteur des sous-modules, la distance en température à la température de couche d'arrêt admissible au maximum du composant à semiconducteur respectif aux tensions possibles aux bornes des sous-modules (12), et
on règle, au moyen d'une fonction cible, des tensions optimum aux bornes des sous-modules (12), dans lequel on utilise, comme fonction cible, une maximisation de la distance en température de la température de couche d'arrêt du composant à semiconducteur, chauffé de la manière la plus intense, dans un sous-module (12) à la température de couche d'arrêt admissible au maximum de ce composant à semiconducteur.

10. Procédé suivant la revendication 9,
**caractérisé en ce que**
l'on détermine, au moyen d'un modèle thermique, les élévations de température des composants à semiconducteur ainsi que les températures des composants à semiconducteur lors d'un défaut.

11. Procédé suivant la revendication 10,
**caractérisé en ce que**
l'on utilise, comme critère d'optimisation, une ripple minimum des tensions aux bornes des sous-modules (12), une même température moyenne des composants à semiconducteur ou un mélange de ces deux critères d'optimisation ou d'autres critères d'optimisation.

# FIG 1

# FIG 2

FIG 3

FIG 4

max(min($\Delta T_{j,HLj}$ mit j = 1...3)) in pu

FIG 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102008045247 A1
- DE 102012220388 A1
- CN 102957378 A

**In der Beschreibung aufgeführte Nicht-Patentliteratur**

- **V. HUSSENNETHER et al.** Projects BorWin2 and HelWin1 - Large Scale Multilevel Voltage-Sourced Converter Technology for Rundling of Offshore Windpower. *CIGRE 2012,* 09. Marz 2012
- **J. DORN et al.** Trans Bay Cable - A Breakthrough of VSC Multilevel Converters in HVDC Transmission. *CIGRE 2012 San Francisco Colloquium,* 09. Marz 2012, 2712-2720